# EUROPÄISCHE PATENTSCHRIFT

(11) **EP 3 047 341 B1**
(45) Veröffentlichungstag und Bekanntmachung des Hinweises auf die Patenterteilung: **12.09.2018**
(21) Anmeldenummer: 14793564.7
(22) Anmeldetag: 05.11.2014
(51) Int. Cl.: G05B 19/042, G06F 17/30

(54) **SYSTEM ZUM RECHNERGESTÜTZTEN ERSTELLEN VON REGELN ZUR ÜBERWACHUNG UND/ODER DIAGNOSE EINER TECHNISCHEN ANLAGE**
SYSTEM FOR THE COMPUTER-ASSISTED CREATION OF RULES FOR MONITORING AND/OR DIAGNOSING A TECHNICAL PLANT
SYSTÈME DE CRÉATION INFORMATISÉE DE RÈGLES DE SURVEILLANCE ET/OU DE DIAGNOSTIC D'UNE INSTALLATION TECHNIQUE

(30) Priorität: 21.11.2013 DE 102013223833
(43) Veröffentlichungstag der Anmeldung: 27.07.2016
(73) Patentinhaber: Siemens Aktiengesellschaft, 80333 München (DE)
(72) Erfinder: ABELE, Lisa Theresa, 81671 München (DE); GRIMM, Stephan, 81825 München (DE); WATZKE, Michael, 81827 München (DE)
(86) Internationale Anmeldenummer: PCT/EP2014/073777
(87) Internationale Veröffentlichungsnummer: WO 2015/074871

(56) Entgegenhaltungen:
- EP-A1- 2 447 845
- US-A1- 2013 179 388

## Beschreibung

Die Erfindung betrifft ein System zum rechnergestützten Erstellen von Regeln zur Überwachung und/oder Diagnose einer technischen Anlage, insbesondere einer industriellen Anlage, wie z.B. einer Fertigungs- bzw. Produktionsanlage.

Zur Überwachung bzw. Diagnose von technischen Anlagen ist es erforderlich, basierend auf der Struktur der Anlage ein geeignetes Überwachungs- bzw. Diagnose-System zu erstellen, das im Betrieb der Anlage basierend auf Sensor-Signalen oder Prozessinformationen der Anlage Fehlfunktionen bzw. kritische Betriebszustände bzw. Ursachen hierfür feststellt.

Aus dem Stand der Technik sind regelbasierte Überwachungssysteme bekannt, die ihr Verhalten basierend auf Regeln anpassen können, die es jedoch nicht ermöglichen, redundante Regeln zu identifizieren bzw. die Konsistenz von Regeln zu überprüfen oder die Regeln auf andere Weise zu analysieren.

Die Dokumente EP 2 447 845 A1 und US 2013/179388 A1 offenbaren Verfahren und Systeme, die basierend auf einer Wissensbasis mittels eines Reasoners Regeln zur Diagnose einer technischen Anlage erstellen.

Aufgabe der Erfindung ist es, ein System zur Erstellung von Regeln zur Überwachung und/oder Diagnose einer technischen Anlage zu schaffen, in dem ein Benutzer beim Entwurf von Regeln einfach und flexibel unterstützt wird und die Regeln automatisch überprüft werden können.

Diese Aufgabe wird durch die unabhängigen Patentansprüche gelöst. Weiterbildungen der Erfindung sind in den abhängigen Ansprüchen definiert.

Das erfindungsgemäße System umfasst eine digitale Wissensbasis in der Form einer ersten Ontologie. Ontologien sind hinlänglich aus dem Stand der Technik bekannt und repräsentieren semantisches Wissen in der Form von digitalen Daten. Hierfür nutzen Ontologien sog. Konzepte bzw. Klassen und Relationen zwischen den Konzepten sowie weitere Konstrukte, wie Inferenz- und Integritätsregeln zum Schlussfolgern und zur Gewährleistung ihrer Gültigkeit. Die erste Ontologie umfasst eine Anlagen-Ontologie, welche die technische Anlage basierend auf Konzepten und Relationen beschreibt, sowie eine Regel-Ontologie, welche als Konzepte Regeln umfasst und somit die Struktur der Regeln abbildet. Eine jeweilige Regel ist dabei über eine Bedingungs-Relation mit Konzepten in der Form von einer oder mehreren Bedingungen verknüpft, die auf ein oder mehrere Konzepte der Anlagen-Ontologie verweisen. Ferner ist eine jeweilige Regel über eine Konsequenz-Relation mit dem Konzept einer aus der oder den Bedingungen abgeleiteten Konsequenz (z.B. eines Zustands) verknüpft, die auf ein oder mehrere Konzepte der Anlagen-Ontologie verweist. Mit anderen Worten leitet eine jeweilige Regel eine Konsequenz in Bezug auf eine Anlagenkomponente dann ab, wenn der oder die Bedingungen der Regel erfüllt sind.

Das erfindungsgemäße System umfasst ferner eine Benutzerschnittstelle, über welche ein Benutzer die Regel-Ontologie durch Spezifikation von Regeln (insbesondere Instantiierung von Regeln) verändern kann, wodurch die erste Ontologie editiert wird. Darüber hinaus ist ein Reasoner (Schlussfolgerer) vorgesehen, wobei Reasoner zur Verarbeitung von Ontologien an sich bekannt sind. Der Reasoner wird auf eine zweite Ontologie angewendet. Die zweite Ontologie kann identisch mit der ersten editierten Ontologie sein oder mittels eines Ontologie-Transformationsmittels aus der ersten editierten Ontologie abgeleitet werden. Der Reasoner verifiziert die Regeln in der zweiten Ontologie und gibt das Verifikationsergebnis über die Benutzerschnittstelle aus. Dem Benutzer wird somit wiederholt die Möglichkeit gegeben, basierend auf dem Verifikationsergebnis des Reasoners über die Benutzerschnittstelle nochmals Änderungen an den Regeln vorzunehmen und dann den Reasoner wieder laufen zu lassen. Der Reasoner erkennt insbesondere redundante, ähnliche, widersprüchliche und inkonsistente Regeln, und diese fehlerhaften Regeln können durch einen Benutzer dann behoben werden.

Das erfindungsgemäße System umfasst ferner ein Regel-Generierungsmittel, um aus der ersten editierten Ontologie ausführbare Regeln zu generieren, die von einer Regel-Maschine (engl. Rule Engine) ausgeführt werden können. Auf diese Weise werden Regeln geschaffen, die anschließend im Betrieb der technischen Anlage mittels der Regel-Maschine verarbeitet werden können, wobei die Regel-Maschine basierend auf den Regeln kritische Zustände, Fehlzustände und dgl. der technischen Anlage erkennen kann bzw. diagnostizieren kann. Die Ausführung von Regeln basierend auf Regel-Maschinen ist dabei an sich aus dem Stand der Technik bekannt.

Die Erfindung beruht auf der Erkenntnis, dass in einem regelbasierten Überwachungs- bzw. Diagnosesystem die Regeln basierend auf einer Ontologie repräsentiert werden können, was die Möglichkeit schafft, dass vom Benutzer erstellte Regeln automatisch mittels eines Reasoners analysiert werden können. Hierdurch wird ein verbessertes System zur Erstellung von benutzerspezifischen Regeln geschaffen, welche anschließend im Betrieb einer technischen Anlage zu deren Überwachung bzw. Diagnose genutzt weden können.

In einer besonders bevorzugten Ausführungsform wird die erste Ontologie basierend auf einem Ontologie-Editor beschrieben und ist mit dem Ontologie-Editor editierbar. Zum Beispiel kann als Editor Semantic Mediawiki verwendet werden, das auf OWL/RDF basiert. Semantic Mediawiki ist ein an sich bekannter Editor aus dem Semantic Web Bereich, der auf Webseiten basiert. Mit diesem Editor kann besonders einfach eine Benutzerschnittstelle zum Editieren von Regeln geschaffen werden. Ggf. kann die erste Ontologie jedoch auch über andere Editoren, wie z.B. Protege, beschrieben werden.

In einer weiteren bevorzugten Ausführungsform wird die zweite Ontologie basierend auf der an sich bekannten Beschreibungssprache OWL (OWL - Ontology Web Language) realisiert.

In einer weiteren Variante des erfindungsgemäßen Systems umfasst die Anlagen-Ontologie eine strukturelle Ontologie und eine Prozess-Ontologie, wobei die strukturelle Ontologie Komponenten der Anlage sowie deren strukturellen Zusammenhänge und die Prozess-Ontologie durch die Komponenten der Anlage durchgeführte Prozesse beschreibt. Hierdurch können strukturiert die beim Betrieb einer Anlage ablaufenden Prozesse in der Ontologie abgebildet werden.

In einer weiteren Ausgestaltung ist das erfindungsgemäße System derart ausgestaltet, dass es zunächst die editierte erste Ontologie exportiert, wobei die exportierte Ontologie anschließend mit dem Ontologie-Transformationsmittel in die zweite Ontologie überführt wird. Insbesondere wird dabei die exportierte Ontologie mit einer generischen Ontologie zusammengefügt, wobei die generische Ontologie Axiome und Konzepte enthält, die im Rahmen der Verifikation durch den Reasoner benötigt werden. Das Zusammenfügen von Ontologien sowie die Definition einer geeigneten generischen Ontologie ist dabei an sich aus dem Stand der Technik bekannt bzw. liegt im Rahmen von fachmännischem Handeln (siehe z.B. Bao, J. und Honavar, V., "Adapt OWL as a Modular Ontology Language", In Proceedings of OWLED 2006 (November 10-11 2006)). Alternativ oder zusätzlich kann die weitere Ontologie von dem Regel-Generierungsmittel zur Erzeugung der ausführbaren Regeln genutzt werden.

In einer weiteren Variante des erfindungsgemäßen Systems können über die Benutzerschnittstelle ferner Konzepte und Relationen der ersten Ontologie durch einen Benutzer spezifiziert werden. Hierdurch wird es ermöglicht, das System flexibel an beliebige technische Anlagen anzupassen.

Der im erfindungsgemäßen System verwendete Reasoner ist vorzugsweise ferner derart ausgestaltet, dass er die Konzepte in der zweiten Ontologie klassifiziert und das Klassifikationsergebnis über die Benutzerschnittstelle ausgibt. Hierdurch werden dem Benutzer hilfreiche Informationen über die technisehe Anlage bzw. die verarbeiteten Regeln gegeben, die er dann wiederum im Rahmen des Editierens der ersten Ontologie berücksichtigen kann.

In einer weiteren Ausführungsform des erfindungsgemäßen Systems ist die Benutzerschnittstelle derart ausgestaltet, dass ein Benutzer Abfragen an die zweite Ontologie richten kann, wobei die Abfrageergebnisse über die Benutzerschnittstelle ausgegeben werden. Vorzugsweise werden dabei Abfragen in der an sich bekannten Abfragesprache SPARQL verarbeitet. Gemäß dieser Variante kann der Benutzer die zweite Ontologie basierend auf seinen Wünschen geeignet analysieren.

In einer weiteren, besonders bevorzugten Ausführungsform ist das Regel-Generierungsmittel derart ausgestaltet, dass es zunächst Regeln in der an sich bekannten RIF-XML-Serialization-Syntax erzeugt und die Regeln dieser Syntax anschließend in die ausführbaren Regeln des Formats der Regel-Maschine übersetzt, wobei entsprechende Übersetzungsalgorithmen an sich bekannt sind. Das Format der Regel-Maschine ist dabei z.B. das Etalis-Format. Mit dieser Variante erfolgt eine Wandlung in das generische RIF-Format, was es ermöglicht, das System flexibel an verschiedene Formate unterschiedlicher Regel-Maschinen anzupassen.

In einer Ausführungsform des erfindungsgemäßen Systems ist das System dazu eingerichtet, zur Überwachung und/oder Diagnose der technischen Anlage während des Betriebs der technischen Anlage die generierten ausführbaren Regeln über die Regel-Maschine auszuführen.

Die Erfindung betrifft ferner ein Verfahren zum rechnergestützten Erstellen von Regeln zur Überwachung und/oder Diagnose einer technischen Anlage mittels des oben beschriebenen erfindungsgemäßen Systems. Dabei wird eine digitale Wissensbasis in der Form einer ersten Ontologie bereitgestellt, wobei die erste Ontologie eine Anlagen-Ontologie umfasst, welche die technische Anlage basierend auf Konzepten und Relationen beschreibt, sowie eine Regel-Ontologie, welche als Konzepte Regeln umfasst, wobei eine jeweilige Regel über eine Bedingungs-Relation mit Konzepten in der Form von einer oder mehreren Bedingungen verknüpft ist, die auf eine oder mehrere Konzepte der Anlagen-Ontologie verweisen, und über eine Konsequenz-Relation mit dem Konzept einer aus der oder den Bedingungen abgeleiteten Konsequenz verknüpft ist, die auf eine oder mehrere Konzepte der Anlagen-Ontologie verweist. Ferner wird eine Benutzerschnittstelle bereitgestellt, über welche ein Benutzer die Regel-Ontologie durch Spezifikation von Regeln verändern kann, wodurch die erste Ontologie editiert wird.

Im Rahmen des obigen Verfahrens wird ein Reasoner auf eine zweite Ontologie angewendet, welche mittels eines Ontologie-Transformationsmittels aus der ersten editierten Ontologie abgeleitet ist oder welche die erste editierte Ontologie ist, wobei der Reasoner die Regeln in der zweiten Ontologie verifiziert und das Verifikationsergebnis über die Benutzerschnittstelle ausgibt. Ferner generiert ein Regel-Generierungsmittel aus der ersten editierten Ontologie ausführbare Regeln, die von einer Regel-Maschine ausgeführt werden können.

Alle im Vorangegangenen beschriebenen bevorzugten Varianten des erfindungsgemäßen Systems können analog auch in dem oben beschriebenen erfindungsgemäßen Verfahren implementiert werden.

Eine Variante des erfindungsgemäßen Verfahrens betrifft darüber hinaus ein Verfahren, wobei ausführbare Regeln, die mit dem oben beschriebenen erfindungsgemäßen System erstellt sind bzw. werden, während des Betriebs der technischen Anlage über eine Regel-Maschine ausgeführt werden.

Die Erfindung umfasst ferner ein Computer-Programmprodukt mit einem auf einem maschinenlesbaren Träger gespeicherten Programmcode zur Durchführung des oben beschriebenen erfindungsgemäßen Verfahrens zum Erstellen von Regeln bzw. des oben beschriebenen erfindungsgemäßen Verfahrens zur Überwachung und/oder Diagnose einer technischen Anlage, wenn der Programmcode auf einem Computer ausgeführt wird.

Ausführungsbeispiele der Erfindung werden nachfolgend anhand der beigefügten Figuren detailliert beschrieben.

Es zeigen:
- Fig. 1: eine schematische Darstellung einer Ausführungsform des erfindungsgemäßen Systems zur Erstellung von Regeln;
- Fig. 2: eine schematische Darstellung der in der Wissensbasis aus Fig. 1 enthaltenen Ontologie;
- Fig. 3: eine detaillierte Darstellung der in Fig. 2 enthaltenen Anlagen-Ontologie;
- Fig. 4: eine detaillierte Darstellung der in Fig. 2 enthaltenen Regel-Ontologie;
- Fig. 5: eine schematische Darstellung einer Klassifikation des Konzepts der Bedingung aus der Regel-Ontologie der Fig. 4; und
- Fig. 6: eine schematische Darstellung eines Beispiels einer Regel, die in der Ontologie ON2 aus Fig. 1 enthalten ist.

Im Folgenden wird ein Ausführungsbeispiel der Erfindung basierend auf der Überwachung bzw. Diagnose einer technischen Anlage in der Form einer industriellen Anlage beschrieben, bei der es sich z.B. um eine Fertigungsstraße oder um eine andere Anlage zur Herstellung von Produkten handeln kann. In der Regel umfasst die Überwachung einer industriellen Anlage die Ableitung von Gerätezuständen der industriellen Anlage, um die Wartung dieser Geräte geeignet zu planen. Ferner beinhaltet die Überwachung meist auch eine sog. Prozess-Überwachung, bei der bestimmte Prozesse, die im Betrieb der Anlage durchgeführt werden, überwacht werden, um deren korrekte Ausführung zu gewährleisten. Ferner beinhaltet die Überwachung einer industriellen Anlage in der Regel auch eine Energie-Überwachung, welche den aktuellen Energieverbrauch der Anlage im Vergleich zu einem erwarteten Energieverbrauch analysiert. Die Betreiber einer industriellen Anlage müssen somit eine Vielzahl von verschiedenartigen Überwachungsaufgaben durchführen. Die im Folgenden beschriebene Ausführungsform stellt dabei ein System bereit, mit dem entsprechende Regeln zur Überwachung der Anlage einfach und effizient erstellt, verwaltet und ausgeführt werden können.

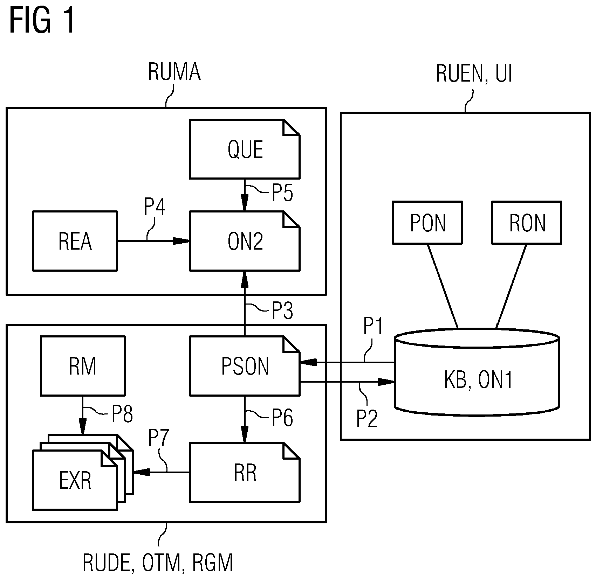

Fig. 1 zeigt in schematischer Darstellung eine Architektur, mit der entsprechende Regeln erzeugt werden können. Die erzeugten Regeln können im Rahmen der Überwachung bzw. gegebenenfalls einer Diagnose einer technischen Anlage angewendet werden. Die Architektur umfasst die Komponente RUEN, welche das Erstellen entsprechender Regeln durch einen Benutzer betrifft (sog. Rule Engineering), die Komponente RUMA, welche die Weiterverarbeitung bzw. Verwaltung der Regeln betrifft (sog. Rule Maintenance), sowie die Komponente RUDE, welche die Umsetzung bzw. Nutzung der Regeln betrifft (sog. Rule Deployment).

Gemäß der Ausführungsform der Fig. 1 wird eine Wissensbasis KB in der Form einer (ersten) Ontologie ON1 bereitgestellt. Diese Ontologie umfasst eine Anlagen-Ontologie PON sowie eine Regel-Ontologie RON. Dabei ist eine Benutzerschnittstelle UI vorgesehen, mit der ein Benutzer, die Regeln zur Überwachung bzw. Diagnose der technischen Anlage entwirft, die Wissensbasis bzw. die erste Ontologie editieren kann, indem er Regeln in der Regel-Ontologie RON spezifiziert bzw. instantiiert. Gegebenenfalls kann ein Benutzer auch Konzepte zu der Anlagen-Ontologie bzw. Regel-Ontologie hinzufügen. Beispiele einer Anlagen-Ontologie und einer Regel-Ontologie werden weiter unten näher beschrieben. Erfindungswesentlich ist dabei, dass in der Wissensbasis KB die Regeln selbst wiederum als eine Ontologie enthalten sind, was es im Rahmen der Weiterverarbeitung der Regeln (Komponente RUMA) ermöglicht, diese Regeln geeignet über einen Reasoner zu verifizieren und zu klassifizieren.

Wie sich aus den obigen Ausführungen ergibt, kann somit ein Benutzer, wie z.B. ein Ingenieur mit Wissen über die Anlage, sein Wissen in der Form einer Ontologie-Bibliothek ON1 in der Wissensbasis KB ablegen bzw. editieren. Die Wissensbasis enthält Ontologien, welche den Ingenieur unterstützen, hierauf anlagen-spezifische Ontologien durch Bearbeiten der Wissensbasis zu generieren. Der Benutzer hat dabei die Möglichkeit, entweder zusätzliche Konzepte zu der Bibliothek hinzuzufügen oder Konzepte auf bereits bestehende Konzepte in der Bibliothek abzubilden. Hierdurch wird die Flexibilität und Anpassbarkeit der Wissensbasis gewährleistet.

In der hier beschriebenen Ausführungsform wird zum Editieren der Wissensbasis KB bzw. der Ontologie ON1 der an sich bekannte Editor "Semantic Mediawiki (SMW)" verwendet, der die Ontologie-Bibliothek in entsprechende RDF-Modelle (RDF = Resource Description Framework) umsetzt, welche es einem Benutzer ermöglichen, strukturiertes Wissen über die Anlage in der Form von Webseiten zu erzeugen und zu editieren. Semantic Mediawiki unterstützt dabei Experten in ihrer Aufgabe, Daten der Anlage und Regeln zur Überwachung bzw. Diagnose der Anlage zu modellieren. Ferner ermöglicht Semantic Mediawiki die Visualisierung und Navigation in entsprechenden modellierten Daten über die technische Anlage. Mit der Komponente RUEN und der zugeordneten Schnittstelle UI wird somit einem Experten ermöglicht, die der Überwachung bzw. Diagnose zugrunde liegende technische Anlage näher zu spezifizieren und entsprechende Regeln zur Überwachung bzw. zur Diagnose der Anlage festzulegen.

Gemäß der Ausführungsform der Fig. 1 wird die durch den Benutzer editierte erste Ontologie ON1 in eine anlagen-spezifische Ontologie PSON exportiert, die auf der an sich bekannten OWL/RDF-Spezifikation beruht (OWL = Ontology Web Language). Dieser Export kann über Semantic Mediawiki mittels der speziellen Webseite "Special:ExportRDF" erfolgen. Der Export der Ontologie ist in Fig. 1 mit dem Pfeil P1 bezeichnet. Dabei besteht auch die Möglichkeit, dass die exportierte Ontologie wieder in die Wissensbasis KB importiert wird, was durch den Pfeil P2 angedeutet ist. Dies wird durch ein Skript erreicht, welches OWL in die SMW-Syntax wandelt. Ein weiteres Merkmal von SMW ist eine Benutzerführung, die durch Templates und Semantic Forms erreicht wird, wodurch es ermöglicht wird, explizit Regel-Vorlagen für Benutzer zu spezifizieren.

Ein Vorteil der Verwendung von Semantic Mediawiki besteht ferner darin, dass die Zusammenarbeit von verschiedenen Experten ermöglicht wird, welche mit unterschiedlichen Aspekten der Anlage vertraut sind. Zum Beispiel können Hersteller von Komponenten der Anlage allgemeine Überwachungsregeln für diese Komponenten spezifizieren, da sie vertieftes Wissen haben, welches zur Überwachung der Komponenten benötigt wird. Ein weiterer Vorteil von Semantic Mediawiki besteht darin, dass es zum einen eine Gesamtübersicht über alle Aspekte der überwachten Anlage mit Navigationslinks liefert und zum anderen spezifische Aspekte der Anlage mit sog. ASK-Abfragen gefiltert werden können.

In der Ausführungsform der Fig. 1 wird die generierte anlagen-spezifische Ontologie PSON in eine zweite OWL-Ontologie ON2 mit einem Ontologie-Transformationsmittel OTM überführt, was durch den Pfeil P3 angedeutet ist. Diese Ontologie ON2 annotiert die Ontologie PSON mit entsprechenden Axiomen und Konzepten (auch als Klassen bezeichnet), welche bei der Weiterverarbeitung der Regeln in der Komponente RUMA benötigt werden. Im Rahmen der Weiterverarbeitung der Regeln wird dabei ein sog. Reasoner REA eingesetzt, wobei Reasoner zum Ableiten von Wissen aus Ontologien an sich bekannt sind. Zum Beispiel kann der Reasoner HermiT bzw. Fact++ bzw. Pellet verwendet werden.

Der Reasoner REA wird auf die Ontologie ON2 angewendet, wie durch den Pfeil P4 angedeutet ist. Der Reasoner verifiziert dabei die in der Ontologie ON2 enthaltenen Regeln, indem er semantisch nicht korrekte Regeln identifiziert. Ferner klassifiziert er die Regeln, indem er sie in einer strukturierten Taxonomie (d.h. Klassifikation) anordnet. Das entsprechende Verifikations- und Klassifikationsergebnis wird wiederum über die Benutzerschnittstelle UI ausgegeben. Der Benutzer kann dann basierend auf dem angezeigten Ergebnis entsprechende Widersprüche in der ursprünglichen Wissensbasis bzw. darin enthaltene Fehler korrigieren. In der Ausführungsform der Fig. 1 besteht ferner die Möglichkeit, dass ein Benutzer Abfragen QUE an die Ontologie ON2 richtet, wie durch den Pfeil P5 angedeutet ist. Hierdurch kann er z.B. wiederverwendbare Regeln aus der Ontologie herausfiltern.

Gemäß der Ausführungsform der Fig. 1 erfolgt eine Umsetzung RUDE der Regeln derart, dass mit einem Regel-Generierungs-Mittel RGM die Ontologie PSON in sog. RIF-Regeln RR übersetzt wird (siehe Pfeil P6). Hierfür werden alle Regel-bezogenen Informationen der Ontologie PSON in eine Regel-Ontologie exportiert, welche dann in die RIF-Regeln RR gewandelt wird. RIF ist ein an sich bekanntes Format, das z.B. durch die RIF-XML-Serialization-Syntax repräsentiert werden kann. Diese Syntax wird mit dem Regel-Generierungs-Mittel RGM über an sich bekannte Verfahren in ausführbare Regeln EXR eines Regel-Sprach-Formats gewandelt, die dann durch eine Regel-Maschine RM (engl. Rule Engine) ausgeführt werden können. Die Wandlung der RIF-Regeln RR in ausführbare Regeln EXR ist in Fig. 1 durch den Pfeil P7 angedeutet. In einer speziellen Ausführungsform beruhen die ausführbaren Regeln dabei auf dem Format Etalis. Mit der entsprechenden Regel-Maschine RM können diese Regeln dann im Realbetrieb des technischen Systems ausgeführt werden (Pfeil P8).

Als Ergebnis können entsprechende Überwachungs- oder Diagnosezustände der technischen Anlage und deren Komponenten bei deren Betrieb basierend auf Sensordaten oder Prozessdaten mithilfe der ausführbaren Regeln abgeleitet werden. Es können somit z.B. Warnmeldungen ausgegeben werden, sofern im Betrieb der technischen Anlage kritische Zustände auftreten. Ebenso können über die ausführbaren Regeln z.B. Diagnosedaten der technischen Anlage gewonnen werden. Durch die Zwischenwandlung der Regeln in das RIF-Format wird die Flexibilität des Systems erhöht, da der Benutzer eine geeignete Regel-Maschine in Abhängigkeit von den Anlagen-spezifischen Gegebenheiten auswählen kann. Falls das System z.B. Echtzeit-Ereignisse überwachen soll, kann er eine komplexere CEP (Complex Event Processing) Regel-Maschine, wie z.B. Drools Fusion, verwenden.

Im Folgenden werden die in der Wissensbasis KB enthaltenen Ontologien PON und RON näher erläutert. Die nachfolgend beschriebenen Ontologien beruhen zum Teil auf Ontologie-Mustern von bekannten Ontologie-Quellen. Zum Beispiel basieren sie auf der Process Specification Language (PSL), welche semantischen Konzepte in Bezug auf den durch die Anlage durchgeführten Prozess identifiziert, formal definiert und strukturiert. Die Anlagen-Ontologie PON enthält semantisches Wissen über die spezifische Anlage, wie z.B. über Verbindungen zwischen Komponenten der Anlage oder über Produkte, welche durch die Anlage hergestellt werden. Demgegenüber enthält die Regel-Ontologie RON Regeln zur Erkennung von Zuständen in der Anlage, wie z.B. eine Regel zum Ableiten des Zustands "powerTooHigh" (d.h. zu hohe elektrische Leistung) für einen Motor m1 der Anlage.

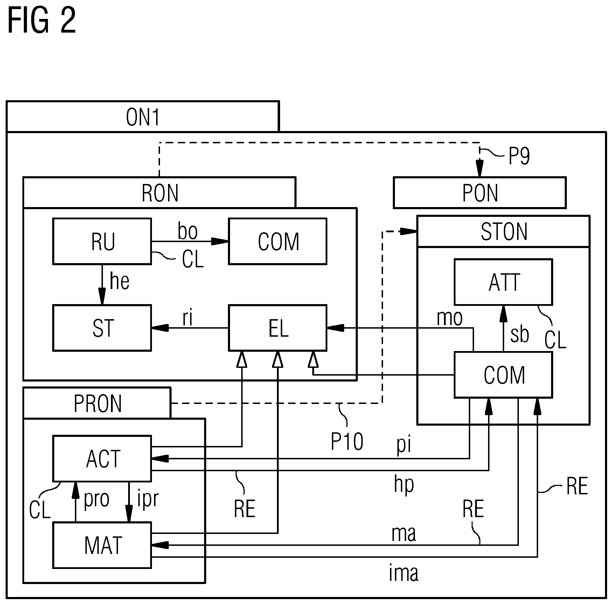

Die Anlagen-Ontologie PON wird in der hier beschriebenen Ausführungsform ferner nochmals aufgeteilt in eine strukturelle Ontologie STON und eine Prozess-Ontologie PRON (Fig. 2). Die strukturelle Ontologie definiert verschiedene Arten von grundlegenden Informationen. Zum einen wird eine Komponenten-Taxonomie festgelegt, welche Klassen von Komponenten identifiziert und benennt und diese in einer Hierarchie anordnet. Ferner beschreibt die strukturelle Ontologie die Topologie der Anlage, was über eine Hierarchie erreicht wird, die festlegt, welche Komponenten in anderen Komponenten enthalten sind. Hierzu wird die weiter unten beschriebene Relation "part-of" (abgekürzt po) genutzt sowie andere Relationen, die ebenfalls weiter unten beschrieben sind. Darüber hinaus definiert die strukturelle Ontologie Eigenschaften von Komponenten über Attribute. Der Namensraum der strukturellen Ontologie ist "pl:".

Die Prozess-Ontologie PRON spezifiziert das Material, das durch Aktivitäten der Anlage verarbeitet und durch Komponenten der Anlage während des gesamten Produktionsprozesses manipuliert wird. Der Namensraum der Prozess-Ontologie ist "pr:".

Im Unterschied zu den obigen Ontologien STON und PRON verwendet die Regel-Ontologie PON Konzepte, welche benötigt werden, um grundlegende Regeln zur Erkennung von Zuständen der überwachten Elemente der anderen Ontologien zu spezifizieren. Diese Regel-Ontologie ist ein wesentlicher Bestandteil des erfindungsgemäßen Systems, da sie zum Erstellen und zum Weiterverarbeiten der Regeln benötigt wird. Der Namensraum der Regel-Ontologie ist "mon:".

Fig. 2 zeigt ein UML-Diagramm, welches eine Ausführungsform einer im erfindungsgemäßen System verwendeten Ontologie ON1 zeigt. Wie oben erwähnt, umfasst diese Ontologie die Anlagen-Ontologie PON und die Regel-Ontologie RON. Die Anlagen-Ontologie setzt sich aus der strukturellen Ontologie STON und der Prozess-Ontologie PRON zusammen. In an sich bekannter Weise werden in dem Diagramm der Fig. 2 und auch in weiteren Figuren durch Pfeile mit schwarzen Spitzen Relationen RE dargestellt. Aus Übersichtlichkeitsgründen sind nur einige der Relationen mit dem Bezugszeichen RE versehen. Demgegenüber charakterisieren Pfeile mit weißen Spitzen Klassenbeziehungen, d.h. das Konzept, an dem ein Pfeil mit weißer Spitze endet, ist ein übergeordnetes Konzept des Konzepts, an dem der Pfeil seinen Ursprung hat. Die Blöcke in Fig. 2, welche keine Ontologien sind, stellen die Klassen bzw. Konzepte dar, welche aus Übersichtlichkeitsgründen nur zum Teil mit dem Bezugszeichen CL versehen sind. Durch die Pfeile mit gestrichelten Linien P9 bzw. P10 wird ferner angedeutet, dass die Ontologie RON die Ontologie PON bzw. die Ontologie PRON die Ontologie STON nutzt. Die strukturelle Ontologie STON enthält als Konzepte Attribute ATT sowie Komponenten COM der Anlage. Die Prozess-Ontologie PRON enthält als Konzepte Aktivitäten ACT sowie Material MAT. Die Regel-Ontologie RON enthält als Konzepte Regeln RU, Zustände ST, Bedingungen CO sowie Elemente EL. Folgende Relationen sind in der Ontologie ON1 der Fig. 2 enthalten:
- Relation sb (= specified-by), die festlegt, durch welches Attribut ATT eine Komponente COM spezifiziert wird;
- Relation mo (= monitors), welche festlegt, welches Element EL durch die Komponente COM überwacht wird;
- Relation pi (= participates-in), welche festlegt, an welcher Aktivität ACT eine Komponente COM beteiligt ist;
- Relation hp (= has-participant), welche festlegt, welche Komponente COM an einer Aktion ACT beteiligt ist;
- Relation pro (= processes), welche festlegt, welche Aktivität ACT ein Material MAT verarbeitet;
- Relation ipr (= is-processed), welche festlegt, welches Material MAT durch eine Aktivität ACT verarbeitet wird;
- Relation ma (= manipulates), welche festlegt, welche Komponente COM ein Material MAT verarbeitet;
- Relation ima (= is-manipulated-by), welche festlegt, welches Material MAT durch eine Komponente COM manipuliert (verarbeitet) wird;
- Relation bo (= body), welche einer if-Relation entspricht und eine Bedingung CO der entsprechenden Regel RU festlegt;
- Relation he (= head), welche einer then-Relation entspricht und festlegt, welcher Zustand ST aufgrund der Regel RU beim Eintritt der über die Relation bo spezifizierten Bedingung CO eintritt;
- Relation ri (= resides-in), welche festlegt, welcher Zustand ST durch ein Element EL eingenommen wird.

Im Speziellen enthält die Anlagen-Ontologie PON der Fig. 2 die in der nachfolgenden Tabelle beschriebenen Konzepte (= Klassen) mit einer entsprechenden (informellen) Definition. Nicht all diese Konzepte sind in Fig. 2 gezeigt. Die nachfolgend genannten deutschen Begriffe für die Konzepte sind dabei äquivalent zu den in Klammern genannten englischen Begriffen.

| **Konzept** | **Definition** |
|---|---|
| Element EL (= Element) | Zentrales Konzept dieser Ontologie, welches alle Objekte einer Anlage umfasst. |
| Aktivität ACT (= Activity) | Eine Aktion, welche in der Prozess-Ontologie definiert ist, z.B. entspricht "m1RunFast" der Klasse der Aktionen, in welcher ein Motor m1 ein Objekt schnell bewegt. |
| Aktivitäts-Auftreten ACO (= Activity-Occurrence) | Eine Aktion, welche an einem spezifischen Ort und einem spezifischen Zeitpunkt instantiiert ist, z.B. entspricht "m1RunFast wird durch Motor m1 um 14 Uhr am 25. Mai 2013 ausgeführt" dem Auftreten der Aktivität "m1RunFast". |
| Komponente COM (= Component) | Dieses Konzept beschreibt eine einzelne oder eine zusammengesetzte Komponente in der Anlage. Die Komponenten können über die Relation pi an Aktivitäten teilnehmen. Jede Anlage setzt sich aus mehreren Komponenten zusammen, z.B. ist die Komponente "Motor m1" Teil der Arbeitszelle 1. |
| Material MAT (= Material) | Eine Klasse des Materials wird über die Relation ima durch Komponenten in der Anlage manipuliert und durch die Relation pro durch Aktivitäten verarbeitet. Die Klasse Material ist entweder eine natürliche Ressource NAR, ein Produkt PRO oder ein Hilfsmaterial AUM. Ein Beispiel für eine natürliche Ressource ist Energie. |
| Material-Auftreten MAO (= Material-Occurrence) | Diese Klasse bezeichnet Material, das in einer Anlage an einem spezifischen Ort und zu einem spezifischen Zeitpunkt verarbeitet wird, z.B. "ein Teil eines Fahrzeugs, das über ein Förderband um 14 Uhr am 24. Juni 2013 transportiert wird". |
| Attribut ATT (= Attribute) | Die Klasse Attribut wird verwendet, um Eigenschaften von Elementen bzw. Komponenten zu spezifizieren, z.B. kann eine Komponente Attribute wie "maximale Eingangsleistung = 400W" umfassen. |
| Attribut-Auftreten ATO (= Attribute-Occurrence) | Diese Klasse beschreibt eine Eigenschaft eines Elements, die zu einem bestimmten Zeitpunkt instantiiert wird, z.B. "ein Motor m1 hat die Eingangsleistung von 500W um 14 Uhr am 25. Mai 2013". |

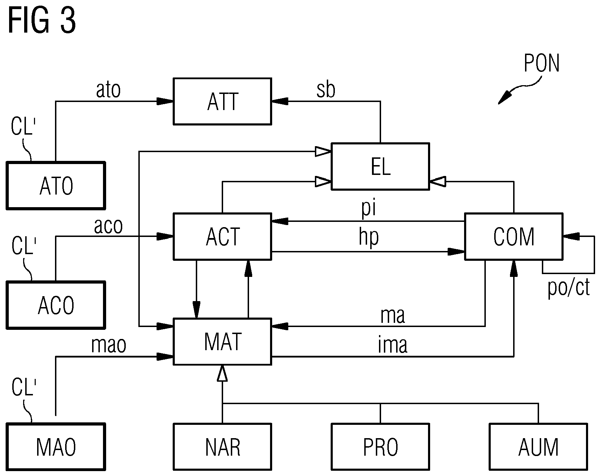

Fig. 3 zeigt nochmals eine detaillierte Darstellung der oben beschriebenen Anlagen-Ontologie PON in der Form eines UML-Diagramms. Neben den bereits in Fig. 2 enthaltenen Klassen bzw. Relationen sind noch die folgenden weiteren Klassen bzw. Relationen gezeigt:
- Die Klasse ATO, welche dem oben beschriebenen Attribut-Auftreten entspricht;
- die Klasse ACO, welche dem oben beschriebenen Aktivitäts-Auftreten entspricht;
- die Klasse MAO, welche dem oben beschriebenen Material-Auftreten entspricht;
- die Klasse NAR, welche der oben beschriebenen natürlichen Ressource entspricht;
- die Klasse PRO, welche dem oben beschriebenen Produkt entspricht;
- die Klasse AUM, welche dem oben beschriebenen Hilfsmaterial entspricht;
- die Relation ato (= attribute-occurence-of), welche spezifiziert, welches Attribut ATT in der Klasse ATO vorkommt;
- die Relation aco (= activity-occurence-of), welche spezifiziert, welche Aktivität ACT in der Klasse ACO vorkommt;
- die Relation mao (= material-occurence-of), welche spezifiziert, welches Material MAT in der MAO vorkommt;
- die Relation po/ct (= part-of/connected-to), welche spezifiziert, von welcher übergeordneten Komponente die Komponente COM Teil ist bzw. mit welcher Komponente die Komponente COM verbunden ist.

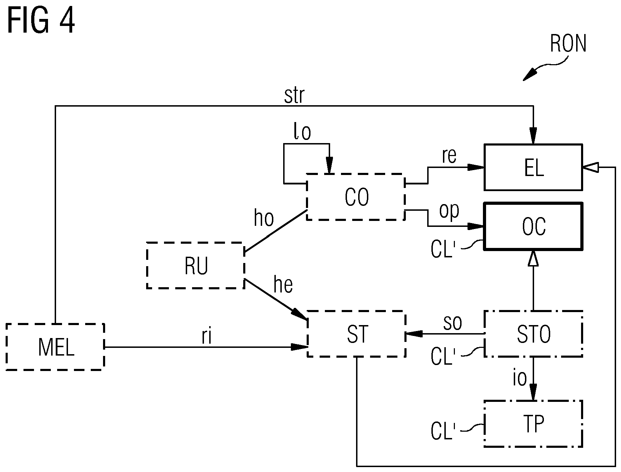

Einige der Konzepte der oben beschriebenen Anlagen-Ontologie bauen auf Ontologie-Muster von verfügbaren Ontologie-Quellen auf, wie z.B. die Konzepte "Aktivität" und "Aktivitäts-Auftreten" mit entsprechenden Axiomen aus der PSL-Ontologie. Alle anderen Konzepte wurden extrahiert, indem verschiedene Produktionsanlagen analysiert wurden, bekannte Standards im Bereich der Herstellung (z.B. CAEX für eine Anlagen-Struktur) überprüft wurden und Interviews mit Experten durchgeführt wurden. Einige Konzepte der in Fig. 3 gezeigten Anlagen-Ontologie PON werden erst zur Laufzeit der Anlage instantiiert. Diese Konzepte sind ergänzend in Fig. 3 mit dem Bezugszeichen CL' bezeichnet und betreffen die Klassen Attribut-Auftreten ATO, Aktivitäts-Auftreten ACO und Material-Auftreten MAO. Diese Konzepte werden als Platzhalter mit Standard-Namen modelliert, so dass sie durch andere Konzepte in der Ontologie repräsentiert und referenziert werden können. Alle Eigenschaften der in Fig. 3 gezeigten Anlagen-Ontologie stellen eine Untereigenschaft der Relation structural-relation dar, die in der weiter unten beschriebenen Fig. 4 mit dem Bezugszeichen str bezeichnet ist.

In der nachfolgenden Tabelle sind Konzepte wiedergegeben, die in der Regel-Ontologie RON enthalten sind. Die nachfolgend genannten deutschen Begriffe für die Konzepte sind dabei äquivalent zu den in Klammern genannten englischen Begriffen.

| **Konzept** | **Definition** |
|---|---|
| überwachtes Element MEL (= Monitoring Element) | Zentrales Konzept dieser Ontologie, welche alle Elemente EL einer Anlage umfasst, die überwacht werden können. Dies ist entweder eine Aktivität, eine Komponente oder ein Material. |
| Regel RU (= Rule) | Eine Regel wird verwendet, um einen Zustand ST für ein überwachtes Element EL basierend auf einer oder mehreren überwachten Bedingungen CO abzuleiten. |
| Bedingung CO (= Monitoring Condition) | Eine Bedingung muss erfüllt sein, um eine Regel auszulösen. Eine Bedingung ist dann erfüllt, wenn ein spezifischer Operator (z.B. "gleich") zwischen einem Element EL, das über die Relation re (= reference) mit der Bedingung verbunden ist, und einem Auftreten OC (weiter unten beschrieben) vorhanden ist. Unterschiedliche überwachte Bedingungen können mit logischen Operatoren, wie z.B. OR oder AND verknüpft sein. |
| Zustand ST (= State) | Eine Klasse von Zuständen, in der sich ein überwachtes Element befindet. Beispielsweise kann ein Zustand definiert sein als "Energie-Verbrauch zu hoch". |
| Zustands-Auftreten STO (= State-Occurrence) | Ein Auftreten eines Zustands. Zum Beispiel ist "Energie-Verbrauch des Motors m1 ist zu hoch um 14 Uhr am 25. Mai 2013" ein Zustands-Auftreten des Zustands "Energie-Verbrauch ist zu hoch". |
| Auftreten OC (= Occurrence) | Ein Supertyp von allen Objekten, die im Betrieb der Anlage instantiiert werden. |
| Zeitpunkt TP (= Timepoint) | Ein spezieller Zeitpunkt. |

Die anhand der obigen Tabelle erläuterten Konzepte bzw. Relationen sind nochmals detailliert in Fig. 4 dargestellt. Dabei werden die Konzepte bzw. Relationen wie folgt bezeichnet:
- RU entspricht dem oben erläuterten Konzept einer Regel;
- CO entspricht dem oben erläuterten Konzept einer überwachten Bedingung;
- ST entspricht dem oben erläuterten Konzept eines Zustands;
- EL entspricht dem oben erläuterten Konzept eines Elements;
- OC entspricht dem oben erläuterten Konzept eines Auftretens;
- STO entspricht dem oben erläuterten Konzept eines Zustand-Auftretens;
- TP entspricht dem oben erläuterten Konzept eines Zeitpunkts;
- MEL entspricht dem oben erläuterten Konzept eines überwachten Elements;
- lo (= logical operator) entspricht einem logischen Operator, wie AND oder OR;
- re (= reference) entspricht der oben erläuterten Relation "reference" und verweist auf ein Element EL;
- op (= operator) entspricht der Relation "operator" und verweist auf ein Auftreten OC;
- so(= state-occurence-of) entspricht der Relation des Auftretens eines Zustands;
- io(= is-occuring-at) entspricht der Relation des Auftretens eines Zustands zu einer bestimmten Zeit.

Die weiteren, in Fig. 4 enthaltenen Relationen wurden bereits im Vorangegangenen beschrieben. Wiederum bezeichnen die Klassen CL' Konzepte, welche während der Laufzeit der Anlage instanziiert werden.

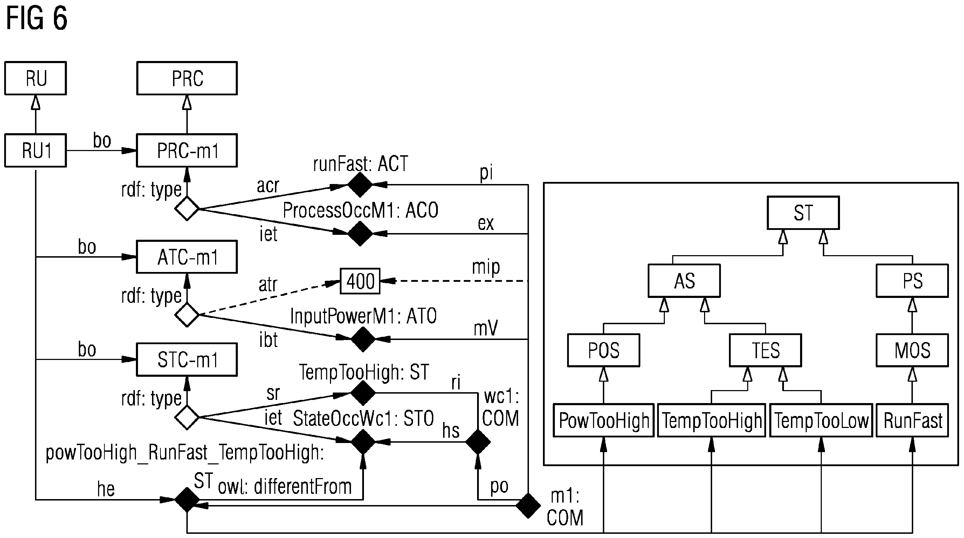

Über die Regel-Ontologie gemäß Fig. 4 kann die korrekte Struktur von Regeln während deren Entwurfs verifiziert werden. Erfindungswesentlich ist dabei, dass nicht nur das Wissen über die technische Anlage, sondern auch die Regeln in der Form von Ontologien erfasst sind. Vor dem Spezifizieren einer Regel für ein spezielles überwachtes Element m1 (m1 bezeichnet einen Motor) über die Benutzerschnittstelle UI kann ein Experte nach Informationen über m1 suchen, die in der Anlagen-Ontologie hinterlegt sind. Zum Beispiel kann der Benutzer nach dem Attribut "powerM1" oder dem Prozess "RunFast" suchen, die mit m1 in Verbindung stehen. Das Attribut "powerM1" bezeichnet dabei die Leistung, mit der der Motor betrieben wird. Während der Definition einer Regel kann der Experte alle Elemente auswählen, die mit der Komponente m1 in Beziehung stehen, insbesondere die gerade erwähnten Attribute bzw. Prozesse "powerM1"und "RunFast". Basierend darauf kann er dann eine Regel spezifizieren, wie z.B. die Regel RU1, die in der weiter unten beschriebenen Fig. 6 gezeigt ist. Das System kann dann über ein Axiom verschiedene Vorgaben verifizieren, z.B. mittels eines Axioms, welches aussagt, dass alle überwachten Bedingungen, die über die Relation lo mit einer Regel (in diesem Fall RU1) verknüpft sind, nur eine Relation structural-relation (str) zu den Objekten haben kann, auf welche sich das überwachte Element (in diesem Fall m1) bezieht.

Zusätzlich kann ein Benutzer die Konzepte der Regel-Ontologie nutzen, um manuell Taxonomien von Zuständen, überwachten Bedingungen oder Regeln zu konstruieren. Solche Taxonomien weisen verschiedene Vorteile auf. Zum einen wird eine höhere Wiederverwendbarkeit der überwachten Regeln aufgrund der gemeinsamen Informationsstrukturen erreicht, wenn neue Regeln durch den Benutzer entworfen werden. Zum anderen wird die Zusammenarbeit zwischen verschiedenen Experten erleichtert, da die automatische Auswahl von Objekten mit identischen Bedeutungen vereinfacht wird.

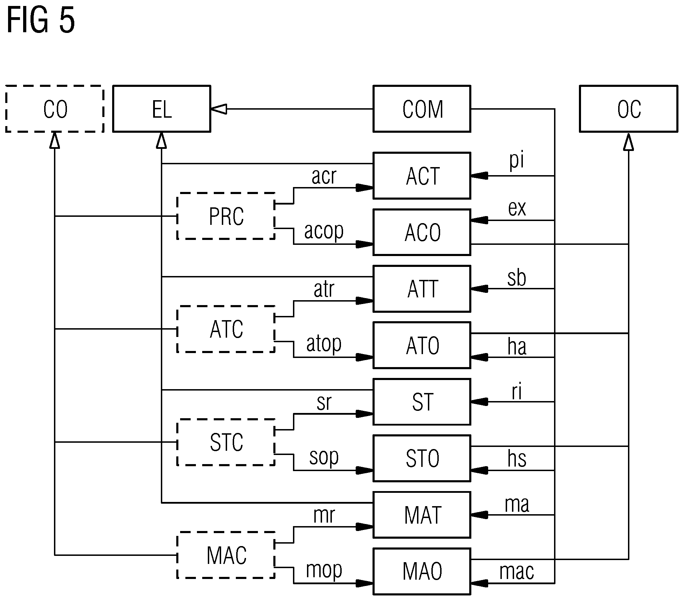

Fig. 5 zeigt in schematischer Darstellung eine mögliche Erweiterung der in Fig. 4 gezeigten Ontologie, wobei eine Taxonomie der überwachten Bedingung CO gebildet wird. Im Besonderen enthält die Klasse der überwachten Bedingung CO die Unterklassen PRC (Prozess-Bedingung), ATC (Attribut-Bedingung), STC (Zustands-Bedingung) sowie MAC (Material-Bedingung). Diese Bedingungen sind mit Unterklassen der Klasse Element EL und der Klasse Auftreten OC verknüpft, nämlich den Klassen ACT, ACO, ATT, ATO, ST, STO, MAT, MAO, die bereits im Vorangegangenen beschrieben wurden. Diese Unterklassen sind mit der Klasse COM über geeignete Relationen verknüpft, nämlich den Relationen pi, ex, sb, ha, ri, hs, ma, mac. Bis auf die Relationen ex, ha, hs und mac wurden alle genannten Relationen bereits oben erläutert. Die Relation ex (= executes) bedeutet, dass die Komponente COM das Aktivitäts-Auftreten ACO ausführt. Die Relation ha (= has-attribute) bedeutet, dass die Komponente COM das Attribut ATO hat. Die Relation hs (= has-state) bedeutet, dass die Komponente COM den Zustand STO hat. Die Relation mac bedeutet, dass die Komponente COM das Material-Auftreten MAC verarbeitet. Die einzelnen Klassen PRC, ATC, STC und MAC haben Relationen mit den genannten Unterklassen der Klasse Element EL und der Klasse Auftreten OC. Dabei werden die Relationen acr, acop, atr, atop, sr, sop, mr und mop verwendet.

Die Bedeutung dieser Relationen ist wie folgt:
acr (= activityRef) stellt eine Referenz re auf eine Aktivität ACT dar;
acop (= activityOp) stellt einen Operator op für ein Aktivitäts-Auftreten ACO dar;
atr (= attributeRef) stellt eine Referenz re auf ein Attribut ATT dar;
atop (= attributeOp) stellt einen Operator op für ein Attribut-Auftreten ATO dar;
sr (= stateRef) stellt eine Referenz re auf einen Zustand ST dar;
sop (= stateOp) stellt einen Operator op für ein Zustands-Auftreten STO dar;
mr (= materialRef) stellt eine Referenz re auf ein Material MAT dar;
mop (= materialOp) stellt einen Operator op für ein Material-Auftreten MAO dar.

Mit der in Fig. 5 gezeigten Ontologie kann die Regel-Ontologie auf verschiedene technische Domänen durch Hinzufügen von domänen-spezifischen Klassen erweitert werden. Zum Beispiel wird die Bedingung "Temperatur von m1 größer 40 °C" nunmehr gemäß Fig. 5 durch die Unterklasse Attribut-Bedingung ATC repräsentiert, wohingegen "Aktivitäts-Auftreten von m1 = mittlere Geschwindigkeit" durch die Unterklasse Prozess-Bedingung PRC spezifiziert ist. Ebenso ist bspw. aus Fig. 5 ersichtlich, dass die Prozessbedingung PRC eine Unterklasse der überwachten Bedingung CO ist.

Fig. 6 verdeutlicht beispielhaft eine über die Benutzerschnittstelle UI in der Wissensbasis KB der Fig. 1 instantiierte Regel RU1 in Bezug auf den Motor m1. Die Regel enthält dabei die Prozess-Bedingung PRC-m1, die Attribut-Bedingung ATC-m1 sowie die Zustands-Bedingung STC-m1. Die Darstellung der Fig. 6 ist dem Fachmann hinlänglich bekannt und beruht auf OWL. Dabei bezeichnen rechteckige Boxen OWL-Klassen, schwarze Rauten OWL-Individuen, weiße Rauten anonyme OWL-Individuen, durchgezogene Pfeile OWL-Objekteigenschaften und gestrichelte Pfeile OWL-Datentyp-Eigenschaften. Fig. 6 enthält die Typdeklarationen RDF:type sowie die an sich bekannte Relation differentFrom aus dem OWL-Namensraum. Ferner bezeichnet die Komponente wc1 die Arbeitszelle 1 und es existieren das Aktivitäts-Auftreten ProcessOccM1, das Attribut-Auftreten InputPowerM1, der Zustand TempTooHigh und das Zustands-Auftreten StateOccWc1. Darüber hinaus existiert der Zustand powTooHigh_RunFast_TempTooHigh. Ferner sind als neue, noch nicht beschriebene Relationen iet (= isEqualto = ist genauso groß wie) sowie ibt (= isBiggerthan = ist größer als) in Fig. 6 enthalten, welche Untertypen der Relation "operation" sind. Ferner bezeichnet die Relationen io (= instance-of) eine entsprechende Instantiierung in der RDF-Syntax, die Relation mv (= measured-value) stellt einen Messwert dar und die Relation mip bezeichnet die maximale Eingangsleistung.

Darüber hinaus ist in Fig. 6 eine Taxonomie von Zuständen wiedergegeben, welche über die Benutzerschnittstelle UI aus Fig. 1 durch einen Benutzer festgelegt werden kann. PowTooHigh bezeichnet dabei den Zustand mit zu hoher Leistung des Motors m1, TempTooHigh den Zustand mit zu hoher Temperatur des Motors m1 und TempTooLow den Zustand mit zu niedriger Temperatur des Motors m1. Wie bereits oben erwähnt, bezeichnet RunFast den Zustand eines schnell laufenden Motor. Der Zustand PowTooHigh ist eine Unterklasse des Leistungszustands POS. Die Zustände TempTooHigh und TempTooLow sind Unterklassen des Temperaturzustands TES. Die Zustände POS und TES sind wiederum Unterklassen des Attribut-Zustands AS, der wiederum eine Unterklasse des Zustands ST ist. Der Zustand RunFast ist eine Unterklasse des Motorzustands MOS, der eine Unterklasse des Prozesszustands PS ist, der wiederum eine Unterklasse des Zustands ST ist.

Die in Fig. 6 dargestellte Regel sagt folgendes aus: "Falls ein Motor m1 eine Aktivität ausführt, die der Aktivität RunFast entspricht und der gemessene Wert der Eingangsleistung größer als 400 ist und m1 ein Teil der Komponente der Arbeitszelle 1 mit der Identität wc1 ist, welche derzeit in einem Zustand zu hoher Temperatur TempTooHigh ist, dann wird der Zustand des Motors m1 auf PowTooHigh_RunFast_TempTooHigh gesetzt, was bedeutet, dass der Energieverbrauch und die Umgebungstemperatur des Motors während des Prozesses RunFast zu hoch sind.

In Folgenden wird beschrieben, wie mit dem in Fig. 1 gezeigten Reasoner REA Regeln aus der Ontologie ON2 verifiziert werden können. Üblicherweise sind verschiedene Experten bei der Implementierung von Regeln über das System der Fig. 1 beteiligt. Diese Experten definieren Regeln, um individuelle überwachte Zustände von überwachten Elementen der Anlage zu spezifizieren. Während des Entwurfs der Regeln oder späterer Adaptionen können redundante, widersprüchliche oder inkonsistente Regeln auftreten. In dem System der Fig. 1 können solche Regeln mittels des Reasoners REA identifiziert werden. Beispielhaft wird eine Verifikation erläutert, gemäß der zwei widersprüchliche Regeln identifiziert werden. Zwei Regeln widersprechen sich, wenn sie zwei unterschiedliche Zustände ableiten, obwohl sie als Eingabe die gleichen Bedingungen haben. Wenn bspw. eine Regel Rulel den Zustand TempTooHigh und eine Regel Rule2 den Zustand TempTooLow ableitet, obwohl sich beide Regeln auf die gleiche Bedingung beziehen, wird eine solche Inkonsistenz durch einen geeigneten OWL-DL Reasoner, wie z.B. Pellet, erkannt. Ein weiteres Beispiel einer Verifikationsaufgabe ist die Identifikation von Regeln, welche nie ausgeführt werden können. Dies ist bspw. der Fall, wenn Regeln inverse überwachte Bedingungen verwenden. Dies trifft bspw. dann auf, wenn eine Regel die beiden Bedingungen "Temperatur von m1 größer 20 °C" und "Temperatur von m1 kleiner 20°C" enthält. Auch solche inverse Bedingungen innerhalb einer Regel werden über einen geeigneten Reasoner erkannt.

Der in Fig. 1 verwendete Reasoner REA kann ferner auch eine Klassifikation vornehmen. Dabei werden an sich bekannte Klassifikations-Mechanismen von OWL-Reasonern eingesetzt, um die Regeln RU sowie die überwachten Bedingungen CO in verschiedene Klassifikationshierarchien bzw. Taxonomien zu strukturieren. Mittels der Klassifikation können Regeln strukturiert werden, indem Subtypen von überwachten Bedingungen identifiziert werden. Allgemein kann eine Regel Rulel als ein Subtyp einer anderen Regel Rule2 klassifiziert werden, falls die Regel Rulel eine Teilmenge der Bedingungen CO der Regel Rule2 verwendet. Ein Beispiel einer Umsetzung dieser Klassifikationsaufgabe ist wie folgt: Falls die Regel Rulel aus Fig. 6 drei Bedingungen aufweist, während eine andere Regel Rule2 nur zwei dieser Bedingungen aufweist, wird die Regel Rulel als Subtyp der Regel Rule2 durch einen OWL-Reasoner klassifiziert. Gemäß der Klassifikations-Aufgabe können auch redundante Regeln identifiziert werden. Der Reasoner überprüft in diesem Fall, ob einige Regeln in der Regel-Ontologie äquivalente Bedingungen aufweisen und die gleichen Zustände folgern. Diese Regeln werden dann durch den Reasoner als äquivalent eingestuft.

Wie aus Fig. 1 ersichtlich, können ferner Abfragen QUE durch einen Benutzer an die Ontologie ON2 gerichtet werden. In einer speziellen Ausführungsform werden dabei SPARQL-Abfragen verarbeitet. Zum Beispiel kann ein Benutzer den Wunsch haben, alle Motoren vom Typ M1FK7 in der Anlage durch neue Motoren vom Typ M1PH8 mit weniger Energieverbrauch zu ersetzen. Über eine entsprechende Abfrage in der Ontologie ON2 kann er dann alle Regeln identifizieren, die den Motor vom Typ M1FK7 enthalten und sich auf den Leistungsverbrauch POS beziehen. Die in Fig. 6 gezeigte Taxonomie von Zuständen kann dabei innerhalb dieser Abfrage verwendet werden. Abfragen können ferner zur Filterung von Metainformationen sowie zur Datenanalyse benutzt werden.

Die in Fig. 1 gezeigte Wandlung der Wissensbasis KB bzw. Ontologie ON1 in ausführbare Regeln EXR kann als Workflow beschrieben werden. In dem Workflow wird sowohl die Anlagen-Ontologie PON als auch die Regel-Ontologie RON über Semantic Mediawiki definiert. Durch diese Ontologien wird die Wissensbasis KB gebildet, die dann in die Anlagen-spezifische OWL-Ontologie PSON mittels eines Exports gewandelt wird. Aus dieser Ontologie wird dann die Ontologie ON2 abgeleitet, die dann über den Reasoner validiert wird. Durch mehrfaches Editieren der ursprünglichen Ontologie ON1 und ein Validieren der daraus abgeleiteten Ontologien ON2 wird schließlich eine konsistente Ontologie erstellt. Um diese zu nutzen, werden die Regeln in der Ontologie PSON auf das generische Format RIF abgebildet. Das heißt, die Regeln werden in die RIF-XML-Serialization-Syntax übersetzt. Die Übersetzung erfolgt dabei mittels XSLT mit einem geeigneten XSL-Stylesheet. Hieraus wird dann die RIF-XML-Serialization-Syntax gemäß der Abbildung erhalten, die in dem W3C RIF-Standard definiert ist. Zur Erzeugung der RIF-Regeln wird ein XSLT-Prozessor, wie z.B. Saxon, verwendet, der mit einem XSL-Stylesheet parametrisiert ist, welches die für die RIF-XML-Syntax spezifische XSLT-Übersetzung enthält. Das XSL-Stylesheet besteht aus einer Anzahl von XML-Templates, welche übereinstimmende XML-Strukturen identifizieren und geeignete RIF-spezifische Code-Fragmente spezifizieren, in welche die XML-Strukturen übersetzt werden.

Die RIF-Regeln werden schließlich über XSLT in spezifische Regeln des Sprachformats einer Regel-Maschine RM gewandelt. Während der XSLT-Prozessierung werden dabei übereinstimmende XML-Strukturen ermittelt und in Regel-Code-Fragmente übersetzt. Schließlich werden über die entsprechende Regel-Maschine ausführbare Regeln erhalten. In einer speziellen Ausführungsform beruhen die ausführbaren Regeln dabei auf der Regel-Sprache Etalis.

Als Ergebnis des im Vorangegangenen beschriebenen Systems erhält man schließlich geeignete ausführbare Regeln, die mit EXR in Fig. 1 bezeichnet sind. Im Rahmen des Betriebs der technischen Anlage, für welche die Regeln entworfen wurden, wird dann eine Regel-Maschine RM mit diesen Regeln in Betrieb genommen. Die Regel-Maschine verarbeitet dabei entsprechende Zustände der technischen Anlage, die z.B. über Sensoren erfasst werden. Als Ergebnis erzeugt die Regel-Maschine dann überwachte Ereignisse und annotiert diese mit maschinenlesbarer Semantik. Die Ereignisse können entweder über eine Schnittstelle einem Benutzter angezeigt werden oder durch weitere Modulen (z.B. ein Diagnose-Modul) verarbeitet werden.

Die im Vorangegangenen beschriebenen Ausführungsformen der Erfindung weisen eine Reihe von Vorteilen auf. Insbesondere wird ein einfaches und effizientes Erstellen von Regeln für eine technische Anlage über eine Benutzerschnittstelle erreicht, wobei die Regeln im Unterschied zum Stand der Technik auch als Ontologien dargestellt werden. Hierdurch wird es ermöglicht, dass über wissensbasiertes Reasoning bzw. Abfrage-Mechanismen die Regeln geeignet überprüft und insbesondere verifiziert und klassifiziert werden können. Das Überprüfungsergebnis kann dem Benutzer präsentiert werden, der daraufhin bei Inkonsistenzen in der Regelbasis Anpassungen an den erstellten Regeln vornehmen kann. Das erfindungsgemäße System ermöglicht ferner eine automatische Wandlung der Regeln aus der Ontologie in geeignete ausführbare Regeln einer Regel-Maschine, die anschließend einfach und effizient zur Überwachung bzw. Diagnose der technischen Anlage eingesetzt werden kann.

## Patentansprüche

1. System zum rechnergestützten Erstellen von Regeln zur Überwachung und/oder Diagnose einer technische Anlage, umfassend:
- einen Reasoner (REA),
- eine digitale Wissensbasis (KB) in der Form einer ersten Ontologie (ON1), umfassend eine Anlagen-Ontologie (PON), welche die technische Anlage basierend auf Konzepten (CL, CL') und Relationen (RE) beschreibt,
**dadurch gekennzeichnet, dass**
- die erste Ontologie (ON1) ferner eine Regel-Ontologie (RON) umfasst, welche als Konzepte (CL, CL') Regeln (RU) umfasst, wobei eine jeweilige Regel (RU) über eine Bedingungs-Relation (bo) mit Konzepten (CL, CL') in der Form von einer oder mehreren Bedingungen (CO) verknüpft ist, wobei die Bedingung oder Bedingungen (CO) auf ein oder mehrere Konzepte der Anlagen-Ontologie (PON) verweisen und wobei die jeweilige Regel (RU) über eine Konsequenz-Relation (he) mit dem Konzept einer aus der oder den Bedingungen (CO) abgeleiteten Konsequenz (ST) verknüpft ist, die auf ein oder mehrere Konzepte (CL, CL') der Anlagen-Ontologie (PON) verweist;
- eine Benutzerschnittstelle (UI) vorgesehen ist, über welche ein Benutzer die Regel-Ontologie (RON) durch Spezifikation von Regeln (RU) verändern kann, wodurch die erste Ontologie (ON1) editiert wird;
- der Reasoner (REA) im Betrieb auf eine zweite Ontologie (ON2) angewendet wird, welche mittels eines Ontologie-Transformationsmittels (OTM) aus der ersten editierten Ontologie (ON1) abgeleitet wird oder welche die erste editierte Ontologie (ON1) ist, wobei der Reasoner (REA) Regeln (RU) in der zweiten Ontologie (ON2) verifiziert und das Verifikationsergebnis über die Benutzerschnittstelle (UI) ausgibt;
- ein Regel-Generierungsmittel (RGM) vorgesehen ist, um aus der ersten editierten Ontologie (ON1) ausführbare Regeln (EXR) zu generieren, die von einer Regel-Maschine (RM) ausgeführt werden können.

2. System nach Anspruch 1, wobei die erste Ontologie (ON1) basierend auf einem Ontologie-Editor beschrieben wird und editierbar ist.

3. System nach Anspruch 1 oder 2, wobei die zweite Ontologie (ON2) basierend auf OWL beschrieben wird.

4. System nach einem der vorhergehenden Ansprüche, wobei die Anlagen-Ontologie (PON) eine strukturelle Ontologie (STON) und eine Prozess-Ontologie (PRON) umfasst, wobei die strukturelle Ontologie (STON) Komponenten der Anlage sowie deren strukturellen Zusammenhänge und die Prozess-Ontologie (PRON) durch die Komponenten der Anlage durchgeführte Prozesse beschreibt.

5. System nach einem der vorhergehende Ansprüche, wobei über die die Benutzerschnittstelle (UI) ferner Konzepte (CL, CL') und/oder Relationen (RE) der ersten Ontologie (ON1) durch einen Benutzer spezifiziert werden können.

6. System nach einem der vorhergehenden Ansprüche, wobei der Reasoner (REA) ferner derart ausgestaltet ist, dass er Konzepte (CL, CL') in der zweiten Ontologie (ON2) klassifiziert und das Klassifikationsergebnis über die Benutzerschnittstelle (UI) ausgibt.

7. System nach einem der vorhergehenden Ansprüche, wobei die Benutzerschnittstelle (UI) derart ausgestaltet ist, dass ein Benutzer Abfragen an die zweite Ontologie (ON2) richten kann, wobei die Abfrageergebnisse über die Benutzerschnittstelle (UI) ausgegeben werden.

8. System nach einem der vorhergehenden Ansprüche, wobei das Regel-Generierungsmittel (RGM) derart ausgestaltet ist, dass es zunächst Regeln (RR) in der RIF-XML-Serialization-Syntax erzeugt und die Regeln (RR) dieser Syntax anschließend in die ausführbaren Regeln (EXR) des Formats der Regel-Maschine (RM) übersetzt.

9. System gemäß einem der vorhergehenden Ansprüche, das dazu eingerichtet ist, zur Überwachung und/oder Diagnose der technischen Anlage während des Betriebs der technischen Anlage die generierten ausführbaren Regeln (EXR) über die Regel-Maschine (RM) auszuführen.

10. Verfahren zum rechnergestützten Erstellen von Regeln zur Überwachung und/oder Diagnose einer technische Anlage mittels eines Systems nach einem der vorhergehenden Ansprüche, wobei:
- ein Reasoner (REA) bereitgestellt wird,
- eine digitale Wissensbasis (KB) in der Form einer ersten Ontologie (ON1) bereitgestellt wird, umfassend eine Anlagen-Ontologie (PON), welche die technische Anlage basierend auf Konzepten (CL, CL') und Relationen (RE) beschreibt,
**dadurch gekennzeichnet, dass**
- die erste Ontologie (ON1) ferner eine Regel-Ontologie (RON) umfasst, welche als Konzepte (CL, CL') Regeln (RU) umfasst, wobei eine jeweilige Regel (RU) über eine Bedingungs-Relation (bo) mit Konzepten (CL, CL') in der Form von einer oder mehrere Bedingungen (CO) verknüpft ist, wobei die Bedingung oder Bedingungen (CO) auf ein oder mehrere Konzepte der Anlagen-Ontologie (PON) verweisen und wobei die jeweilige Regel (RU) über eine Konsequenz-Relation (he) mit dem Konzept einer aus der oder den Bedingungen (CO) abgeleiteten Konsequenz (ST) verknüpft ist, die auf ein oder mehrere Konzepte der Anlagen-Ontologie (PON) verweist;
- eine Benutzerschnittstelle (UI) bereitgestellt wird, über welche ein Benutzer die Regel-Ontologie (RON) durch Spezifikation von Regeln (RU) verändern kann, wodurch die erste Ontologie (ON1) editiert wird;
- der Reasoner (REA) auf eine zweite Ontologie (ON2) angewendet wird, welche mittels eines Ontologie-Transformationsmittels (OTM) aus der ersten editierten Ontologie (ON1) abgeleitet wird oder welche die erste editierte Ontologie (ON1) ist, wobei der Reasoner (REA) Regeln (RU) in der zweiten Ontologie (ON2) verifiziert und das Verifikationsergebnis über die Benutzerschnittstelle (UI) ausgibt;
- ein Regel-Generierungsmittel (RGM) aus der ersten editierten Ontologie (ON1) ausführbare Regeln (EXR) generiert, die von einer Regel-Maschine (RM) ausgeführt werden können.

11. Verfahren gemäß Anspruch 10, wobei die ausführbaren Regeln (EXR) während des Betriebs der technischen Anlage über die Regel-Maschine (RM) ausgeführt werden.

12. Computerprogrammprodukt mit einem auf einem maschinenlesbaren Träger gespeicherten Programmcode zur Durchführung eines Verfahrens nach Anspruch 10 oder 11, wenn der Programmcode auf einem Computer ausgeführt wird.

## Claims

1. System for the computer-aided creation of rules for monitoring and/or diagnosing a technical plant, comprising:
- a reasoner (REA),
- a digital knowledge base (KB) in the form of a first ontology (ON1), comprising a plant ontology (PON), which describes the technical plant on the basis of concepts (CL, CL') and relations (RE),
**characterized in that**
- the first ontology (ON1) also comprises a rule ontology (RON), which comprises rules (RU) as concepts (CL, CL'), wherein a respective rule (RU) is linked by means of a condition relation (bo) to concepts (CL, CL') in the form of one or more conditions (CO), wherein the condition or conditions (CO) refer to one or more concepts of the plant ontology (PON) and wherein the respective rule (RU) is linked by means of a consequence relation (he) to the concept of a consequence (ST) that is derived from the condition (s) (CO) and that refers to one or more concepts (CL, CL') of the plant ontology (PON);
- a user interface (UI) is provided by means of which a user can alter the rule ontology (RON) by specifying rules (RU), whereby the first ontology (ON1) is edited;
- the reasoner (REA), during operation, is applied to a second ontology (ON2), which is derived from the first edited ontology (ON1) by means of an ontology transformation means (OTM) or which is the first edited ontology (ON1), wherein the reasoner (REA) verifies rules (RU) in the second ontology (ON2) and outputs the verification result via the user interface (UI);
- a rule generation means (RGM) is provided in order to generate executable rules (EXR) from the first edited ontology (ON1), which executable rules can be executed by a rule engine (RM).

2. System according to Claim 1, wherein the first ontology (ON1) is described and is editable on the basis of an ontology editor.

3. System according to Claim 1 or 2, wherein the second ontology (ON2) is described on the basis of OWL.

4. System according to one of the preceding claims, wherein the plant ontology (PON) comprises a structural ontology (STON) and a process ontology (PRON), wherein the structural ontology (STON) describes components of the plant and also the structural correlations thereof and the process ontology (PRON) describes processes performed by the components of the plant.

5. System according to one of the preceding claims, wherein the user interface (UI) can additionally be used by a user to specify concepts (CL, CL') and/or relations (RE) of the first ontology (ON1).

6. System according to one of the preceding claims, wherein the reasoner (REA) is additionally embodied such that it classifies concepts (CL, CL') in the second ontology (ON2) and outputs the classification result via the user interface (UI).

7. System according to one of the preceding claims, wherein the user interface (UI) is embodied such that a user can direct queries to the second ontology (ON2), the query results being output via the user interface (UI).

8. System according to one of the preceding claims, wherein the rule generation means (RGM) is embodied such that it first of all generates rules (RR) in the RIF-XML serialization syntax and subsequently translates the rules (RR) of this syntax into the executable rules (EXR) of the format of the rule engine (RM).

9. System according to one of the preceding claims, set up to monitor and/or diagnose the technical plant by executing the generated executable rules (EXR) by means of the rule engine (RM) during operation of the technical plant.

10. Method for the computer-aided creation of rules for monitoring and/or diagnosing a technical plant by means of a system according to one of the preceding claims, wherein:
- a reasoner (REA) is provided,
- a digital knowledge base (KB) in the form of a first ontology (ON1) is provided, comprising a plant ontology (PON), which describes the technical plant on the basis of concepts (CL, CL') and relations (RE),
**characterized in that**
- the first ontology (ON1) also comprises a rule ontology (RON), which comprises rules (RU) as concepts (CL, CL'), wherein a respective rule (RU) is linked by means of a condition relation (bo) to concepts (CL, CL') in the form of one or more conditions (CO), wherein the condition or conditions (CO) refer to one or more concepts of the plant ontology (PON) and wherein the respective rule (RU) is linked by means of a consequence relation (he) to the concept of a consequence (ST) that is derived from the condition(s) (CO) and that refers to one or more concepts of the plant ontology (PON);
- a user interface (UI) is provided, by means of which a user can alter the rule ontology (RON) by specifying rules (RU), whereby the first ontology (ON1) is edited;
- the reasoner (REA) is applied to a second ontology (ON2), which is derived from the first edited ontology (ON1) by means of an ontology transformation means (OTM) or which is the first edited ontology (ON1), wherein the reasoner (REA) verifies rules (RU) in the second ontology (ON2) and outputs the verification result via the user interface (UI);
- a rule generation means (RGM) generates executable rules (EXR) from the first edited ontology (ON1), which executable rules can be executed by a rule engine (RM).

11. Method according to Claim 10, wherein the executable rules (EXR) are executed by means of the rule engine (RM) during operation of the technical plant.

12. Computer program product having a program code, which is stored on a machine-readable storage medium, for performing a method according to Claim 10 or 11 when the program code is executed on a computer.

## Revendications

1. Système de création informatisée de règles de surveillance et/ou de diagnostic d'une installation technique comportant :
- un raisonneur (REA),
- une base de connaissances numérique (KB) sous la forme d'une première ontologie (ON1), comprenant une ontologie d'installation (PON) qui décrit l'installation technique sur la base de concepts (CL, CL') et de relations (RE),
**caractérisé en ce que**
- la première ontologie (ON1) comprend en outre une ontologie de règles (RON) qui comprend des règles (RU) en tant que concepts (CL, CL'), une règle respective (RU) étant associée, via une relation de condition (bo), à des concepts (CL, CL') sous la forme d'une ou de plusieurs conditions (CO), la condition ou les conditions (CO) renvoyant à un ou plusieurs concepts de l'ontologie d'installation (PON) et la règle respective (RU) étant associée, via une relation de conséquence (he), au concept d'une conséquence (ST) dérivée de la ou des conditions (CO) et qui renvoie à un ou à plusieurs concepts (CL, CL') de l'ontologie d'installation (PON) ;
- une interface utilisateur (UI) est prévue, via laquelle un utilisateur peut modifier l'ontologie de règles (RON) par spécification de règles (RU), ce par quoi la première ontologie (ON1) est éditée ;
- le raisonneur (REA) est appliqué, pendant le fonctionnement, à une deuxième ontologie (ON2) qui est dérivée de la première ontologie éditée (ON1) au moyen d'un moyen de transformation d'ontologie (OTM) ou qui est la première ontologie éditée (ON1), le raisonneur (REA) vérifiant des règles (RU) dans la deuxième ontologie (ON2) et produisant en sortie le résultat de la vérification via l'interface utilisateur (UI) ;
- un moyen de génération de règles (RGM) est prévu pour générer, à partir de la première ontologie éditée (ON1), des règles exécutables (EXR) qui peuvent être exécutées par une machine de règles (RM).

2. Système selon la revendication 1, la première ontologie (ON1) étant décrite et pouvant être éditée sur la base d'un éditeur d'ontologie.

3. Système selon la revendication 1 ou 2, la deuxième ontologie (ON2) étant décrite sur la base de l'OWL.

4. Système selon l'une des revendications précédentes, l'ontologie d'installation (PON) comprenant une ontologie structurelle (STON) et une ontologie de processus (PRON), l'ontologie structurelle (STON) décrivant des composants de l'installation ainsi que leurs rapports structurels et l'ontologie de processus (PRON), des processus exécutés par les composants de l'installation.

5. Système selon l'une des revendications précédentes, des concepts (CL, CL') et/ou des relations (RE) de la première ontologie (ON1) pouvant en outre être spécifiés par un utilisateur via l'interface utilisateur (UI).

6. Système selon l'une des revendications précédentes, le raisonneur (REA) étant en outre conçu pour classer des concepts (CL, CL') dans la deuxième ontologie (ON2) et produire en sortie le résultat du classement via l'interface utilisateur (UI).

7. Système selon l'une des revendications précédentes, l'interface utilisateur (UI) étant conçue de telle sorte qu'un utilisateur peut adresser des requêtes à la deuxième ontologie (ON2), les résultats des requêtes étant produits en sortie via l'interface utilisateur (UI) .

8. Système selon l'une des revendications précédentes, le moyen de génération de règles (RGM) étant conçu pour générer tout d'abord des règles (RR) dans la syntaxe RIF XML Serialization et pour ensuite traduire les règles (RR) de cette syntaxe dans les règles exécutables (EXR) du format de la machine de règles (RM).

9. Système selon l'une des revendications précédentes, configuré pour exécuter via la machine de règles (RM) les règles exécutables générées (EXR) aux fins de la surveillance et/ou du diagnostic de l'installation technique pendant le fonctionnement de l'installation technique.

10. Procédé de création informatisée de règles de surveillance et/ou de diagnostic d'une installation technique au moyen d'un système selon l'une des revendications précédentes,
- un raisonneur (REA) étant fourni,
- une base de connaissances numérique (KB) étant fournie sous la forme d'une première ontologie (ON1) comprenant une ontologie d'installation (PON) qui décrit l'installation technique sur la base de concepts (CL, CL') et de relations (RE),
**caractérisé en ce que**
- la première ontologie (ON1) comprend en outre une ontologie de règles (RON) qui comprend des règles (RU) en tant que concepts (CL, CL'), une règle respective (RU) étant associée, via une relation de condition (bo), à des concepts (CL, CL') sous la forme d'une ou de plusieurs conditions (CO), la condition ou les conditions (CO) renvoyant à un ou plusieurs concepts de l'ontologie d'installation (PON) et la règle respective (RU) étant associée, via une relation de conséquence (he), au concept d'une conséquence (ST) dérivée de la ou des conditions (CO) et qui renvoie à un ou à plusieurs concepts (CL, CL') de l'ontologie d'installation (PON) ;
- une interface utilisateur (UI) est fournie, via laquelle un utilisateur peut modifier l'ontologie de règles (RON) par spécification de règles (RU), ce par quoi la première ontologie (ON1) est éditée ;
- le raisonneur (REA) est appliqué à une deuxième ontologie (ON2) qui est dérivée de la première ontologie éditée (ON1) au moyen d'un moyen de transformation d'ontologie (OTM) ou qui est la première ontologie éditée (ON1), le raisonneur (REA) vérifiant des règles (RU) dans la deuxième ontologie (ON2) et produisant en sortie le résultat de la vérification via l'interface utilisateur (UI) ;
- un moyen de génération de règles (RGM) générant, à partir de la première ontologie éditée (ON1), des règles exécutables (EXR) qui peuvent être exécutées par une machine de règles (RM).

11. Procédé selon la revendication 10, les règles exécutables (EXR) étant exécutées pendant le fonctionnement de l'installation technique via la machine de règles (RM).

12. Produit de programme informatique comportant un code de programme sauvegardé sur un support lisible par machine pour exécuter un procédé selon la revendication 10 ou 11 lorsque le code de programme est exécuté sur un ordinateur.
